# EUROPEAN PATENT APPLICATION

(11) **EP 1 804 247 A1**
(43) Date of publication of application: **04.07.2007**
(21) Application number: 06126193.9
(22) Date of filing: 14.12.2006
(51) Int. Cl.: G11B 27/34, G06F 17/30, G06T 1/00, H04N 1/00

(54) **Managing image files**

(30) Priority: 28.12.2005 KR 20050131903
(71) Applicant: Samsung Electronics Co., Ltd., Suwon-si 442-742 Gyeonggi-Do (KR)
(72) Inventor: Park, Min-su B-2420 Doosan We've Pavilion, Gyeonggi-do (KR)
(74) Representative: Pisani, Diana Jean

(57) **Abstract**

A method and apparatus is provided for copying image files stored in an external storage medium (210) to a built-in storage medium (250) in an image forming device (200) and managing the copied image files. The method includes detecting whether the external storage medium (210) is connected to the image forming device and, if so, storing the image files stored in the external storage medium (210) in the built-in storage medium (250). When a user connects the external storage medium (210) to the image forming device (200), the user can easily manage copying, printing, editing and/or deletion of the image files using a user interface (150) when connection of the external storage medium (250) is detected by the image forming device (200).

## Description

The present invention relates to a method and apparatus for managing image files stored in a storage medium. More particularly, the present invention relates to a method and apparatus for copying image files stored in a portable storage medium connected to an image forming device into a built-in storage medium of the image forming device and managing the copied files.

Image forming devices perform the function of converting a document edited by a user, using an application program, into encoded data and printing the encoded data onto paper.

Recently, image forming devices have been developed that can be connected directly to memory cards or universal serial bus (USB) flash drives. Such image forming devices can store image files and print image files input from these external storage media, and/or may include a high-capacity hard disk drive (HDD).

Portable storage media, such as memory cards and USB flash drives, have a relatively small storage capacity compared to the high-capacity HDD and may be easily lost. Consequently, such portable storage media are not appropriate for storing important image files for long periods of time.

Accordingly, a need exists for an improved system and method for copying and managing files from portable storage media.

It is an object of the present invention to provide a method and apparatus for managing image files stored in an external storage medium connected to an image forming device, by which the stored image files can be easily copied into a built-in storage medium of the image forming device by connecting the portable storage medium to the image forming device.

According to an aspect of the present invention, a method of managing image files stored in an external storage medium connected to an image forming device comprises determining whether the external storage medium is connected to the image forming device and, in response to a positive determination, storing the image files stored in the external storage medium in a storage unit included in the image forming device.

This aspect also provides a computer readable recording medium storing a computer readable program for executing the image file managing method.

The method may comprise determining whether the image files stored in the external storage medium are stored in the storage unit, and/or allowing a user to set storage options for copying the image files stored in the external storage medium to the storage unit. The storage options may comprise at least one of an option for the automatic copying of all files stored in the external storage medium, an option for the copying of said files and an option for the selected copying of said files.

The method may comprise generating the name of a folder in which the image files are to be stored. If the files are being copied under the direction of an automatic storage option, the name may be based on at least one of the type of the external storage medium used and the copying date and time..

The method may comprise allowing the user to select a folder in which the image files are to be stored from a plurality of folders of the storage unit, if the user sets a copy all files option, wherein all image files stored in the external storage medium are stored in the selected folder of the storage unit.

The method may comprise displaying information on existing folders in the storage unit.

The method may comprise, where a user has set a copy selected files option, displaying information on the image files stored in the external storage medium.

The user can then select an image file to be copied to the storage unit from among the displayed image files of the external storage medium, and the user can select a folder in which the selected image file is to be stored from among folders of the storage unit. The displayed image file information may comprise thumbnail images corresponding to the image files.

The method may comprise displaying information on image files stored in the storage unit. The displaying of the image file information may comprise determining whether the image forming device is switched on and, in response to a positive determination, searching for folders in the storage unit generated by an automatic copy all files option and displaying information on the folders located by that search. A user can then select one of the displayed folders so that information on image files stored in the selected folder can be displayed.

The method may comprise allowing the user to select at least one of the displayed image files and to input a job for the selected image file, and then performing the job for the selected image file.

According to another aspect of the present invention, an apparatus for managing image files stored in an external storage medium connected to an image forming device is provided, comprising a storage unit included in the image forming device and storing image files, an interface unit for determining whether the external storage medium is connected to the image forming device and transmitting and receiving data to and from the external storage medium, and a controller for storing the image files stored in the external storage medium in the storage unit if it is determined that the external storage medium is connected to the image forming device.

The apparatus may comprise a user interface unit for displaying a message to enquire whether the user wishes to store in the storage unit the image files stored in the external storage medium. The user interface unit may be configured to allow the user to set one or more storage options, such as an option for automatic copying of all files, an option for the copying of all files and an option for the selected copying of files.

When the automatic copying option is set, the controller can generate the name of a folder in which the image files are to be stored using at least one of the type of the external storage medium and the copy date and time, and store all image files stored in the external storage medium in the folder having the generated name.

When the copy all files option is set, the user interface unit may allow the user to select a folder in which the image files are to be stored from among folders of the storage unit, and the controller can store all image files stored in the external storage medium in the selected folder of the storage unit.

When the copy selected files option is set, the user interface unit may display information on the image files stored in the external storage medium and allow the user to select an image file to be copied to the storage unit from among the displayed image files of the external storage medium and a folder in which the selected image file is to be stored from among folders of the storage unit, and the controller can store the selected image file in the selected folder of the storage unit.

The apparatus may further comprise a user interface unit for displaying information on image files stored in the storage unit.

Embodiments of the present invention will now be described, by way of example, with reference to the attached drawings, in which:
Figure 1 is a block diagram of an apparatus for managing image files stored in an external storage medium according to an embodiment of the present invention;
Figure 2 is a block diagram of an image forming device comprising the image file managing apparatus of Figure 1;
Figure 3 illustrates a user interface provided to a user when an external storage medium is connected to the image forming device of Figure 2;
Figure 4 is a flowchart illustrating a method of managing image files stored in an external storage medium according to an embodiment of the present invention;
Figure 5 is a flowchart illustrating a method of managing image files stored in an external storage medium according to another embodiment of the present invention; and
Figure 6 is a flowchart illustrating a method of managing image files copied into a built-in storage medium of an image forming device using an automatic copying option, according to yet another embodiment of the present invention.

Throughout the drawings, like reference numerals will be understood to refer to like parts, components and structures.

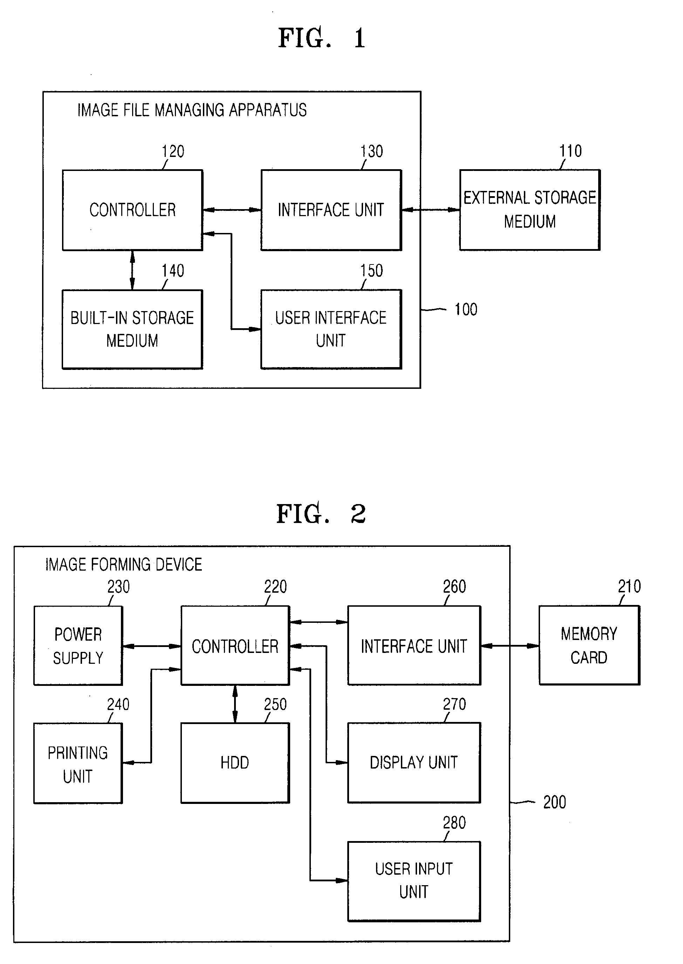

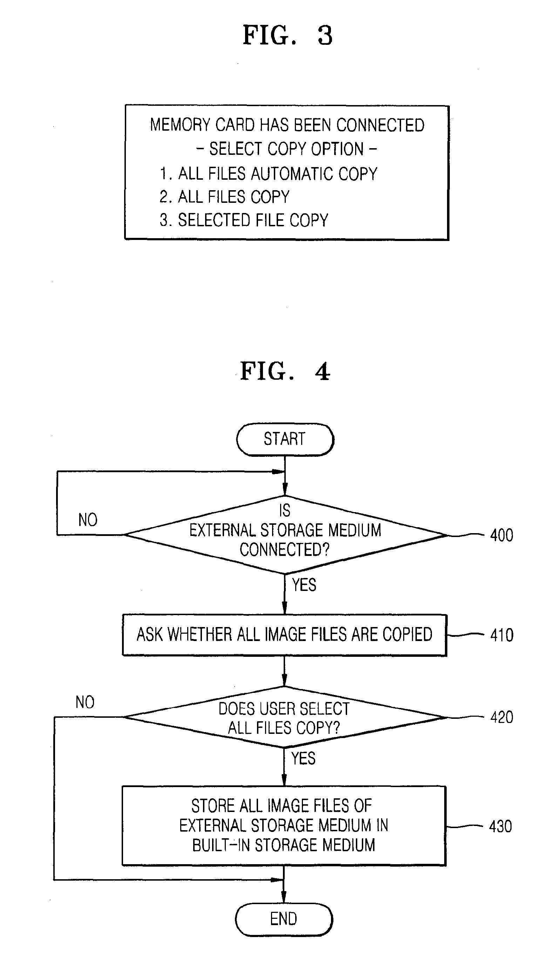

Figure 1 is a block diagram of an apparatus 100 for managing image files stored in an external storage medium 110, according to an embodiment of the present invention. The image file managing apparatus 100 illustrated in Figure 1 comprises a controller 120, an interface unit 130, a built-in storage medium 140 and a user interface unit 150. The operation of the image file managing apparatus 100 illustrated in Figure 1 will now be described in conjunction with Figure 4, which is a flowchart illustrating a method of managing image files stored in the external storage medium 110, according to an embodiment of the present invention.

The controller 120 controls the general operation of the interface unit 130, the built-in storage medium 140 and the user interface unit 150.

When the external storage medium 110 is connected to an image forming device, the interface unit 130 detects the connection of the external storage medium 110 in operation 400. The interface unit 130 transmits data to and receives data from, the connected external storage medium 110. The connection between the interface unit 130 and the external storage medium 110 may be a wired or wireless connection. In this particular example, data may be transmitted or received using Bluetooth or wireless USB (WUSB) where there is a wireless connection, and using USB in the case of a wired connection, but the invention is not limited thereto.

Examples of external storage media 110 which may be connected to the image forming device include compact flash (CF) memory cards, smart media (SM) memory cards, extreme digital (XD) memorycards, memory sticks (MS), secure digital (SD) memory card, a multimedia cards (MMC) and so forth.

In operation 410, the user interface unit 150 displays a message to enquire whether a user wishes to copy all of the images stored in the connected external storage medium 110 into the built-in storage medium 140, e.g. a message such as "Do you want to copy all images from the connected external storage medium?".

If the user selects an option to copy all image files in operation 420, the interface unit 130 receives all stored image files from the external storage medium 110 and the controller 120 stores the received image files in the built-in storage medium 140 in operation 430.

A method of managing image files stored in an external storage medium according to an embodiment of the present invention will now be described in detail.

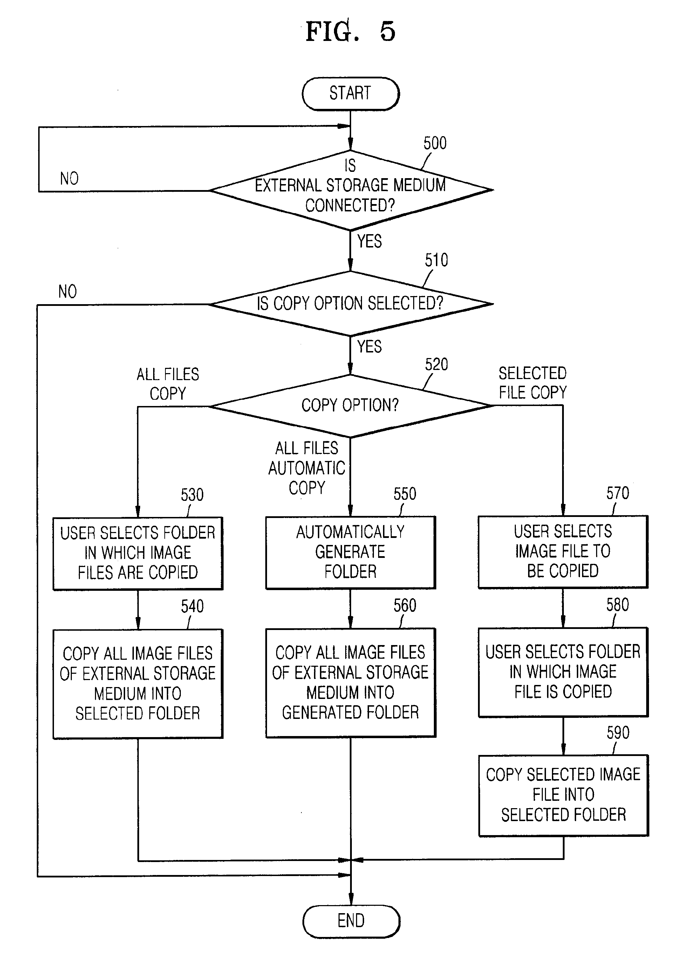

Figure 2 is a block diagram of an image forming device 200 comprising an image file managing apparatus according to an embodiment of the present invention. The image forming device 200 illustrated in Figure 2 comprises a controller 220, a power supply 230, a printing unit 240, a hard disk drive (HDD) 250, an interface unit 260, a display unit 270 and a user input unit 280. The operation of the image forming device 200 illustrated in Figure 2 will now be described in conjunction with Figure 5, which is a flowchart illustrating a method of managing image files stored in an external storage medium according to another embodiment of the present invention.

The controller 220 controls the general operation of the power supply 230, the printing unit 240, the HDD 250, the interface unit 260, the display unit 270 and the user input unit 280.

In operation 500, the interface unit 260 determines whether a memory card 210 is connected to the image forming device 200. If a memory card 210 is connected to the image forming device 200, the display unit 270 displays a message to enquire whether the user wishes to copy image files stored in the memory card 210 onto the HDD 250 and displays information on available copy options that can be selected by the user. Figure 3 illustrates a user interface provided to a user when a memory card 210 is connected to the image forming device 200 according to an embodiment of the present invention. As illustrated in Figure 3, if the memory card 210 is connected to the image forming device 200, the user interface is provided through the display unit 270, providing information on the connection of the memory card 210 (e.g. "memory card has been connected"), allowing the user to select one of an automatic copying of all files option, a copy all files option, and a copy selected files option (e.g. "select copy option).

The user selects an option according to whether the image files stored in the memory card 210 are to be copied onto the HDD 250. In operation 510, the controller 220 determines whether the user has selected a copy option. If a copy option has been selected, the controller 220 determines which copy option has been selected and controls the interface unit 260, the display unit 270 and the user input unit 280 according to the selected copy option in operation 520.

If the copy all files option is selected by the user in operation 520, the display unit 270 receives information on folders in the HDD 250 from the controller 220 and displays the received folder information. The user can then select one or more folders of the HDD 250 into which the image files stored on the memory card 210 are to be copied, using the user input unit 280 in operation 530. In operation 540, the interface unit 260 transmits a signal to the memory card 210, requesting transmission of all stored image files. The interface unit 260 then receives all the image files from the memory card 210, and stores them in the selected folder or folders of the HDD 250.

If the automatic copying of all files option is selected by the user in operation 520, the controller 220 generates a folder or folders of the HDD 250 into which all image files stored in the memory card 210 are to be copied, in operation 550. The controller 220 may generate the name of the folder by information regarding the type of memory card 210, the copy date and time. For example, if the memory card 210 is a CF memory card and the copy date and time are 27 September 2005, 10:30, the controller 220 may generate a folder named "CF_2005/09/27/10:30" in which to store the image files. The type information can be received by the interface unit 260 from the memory card 210.

In operation 560, the interface unit 260 transmits a signal for requesting transmission of all stored image files to the memory card 210 and receives the stored image files from the memory card 210. The controller 220 then copies all the image files on the memory card 210 to the generated folder or folders of the HDD 250.

If the copy selected file option is selected by the user, the interface unit 260 transmits a signal for requesting information on stored image files to the memory card 210 and receives the information. The display unit 270 then displays the received image file information. The displayed image file information may comprise thumbnail images corresponding to the image files, but is not limited thereto. In operation 570, the user selects an image file to be copied to the HDD 250 from among the displayed image files using the user input unit 280.

In operation 580, the display unit 270 receives and displays information on existing folders on the HDD 250 from the controller 220. The user can then select a folder or folders of the HDD 250 into which the selected image file is to be copied using the user input unit 280. In operation 590, the interface unit 260 transmits a signal for requesting transmission of the selected image file to the memory card 210 and receives the selected image file from the memory card 210. The controller 220 stores the received image file in the selected folder or folders of the HDD 250.

The user can use the user input unit 280 to request printing of the selected image file, in which case the controller 220 outputs the selected image file to the printing unit 240 and controls the printing unit 240 to print the selected image file.

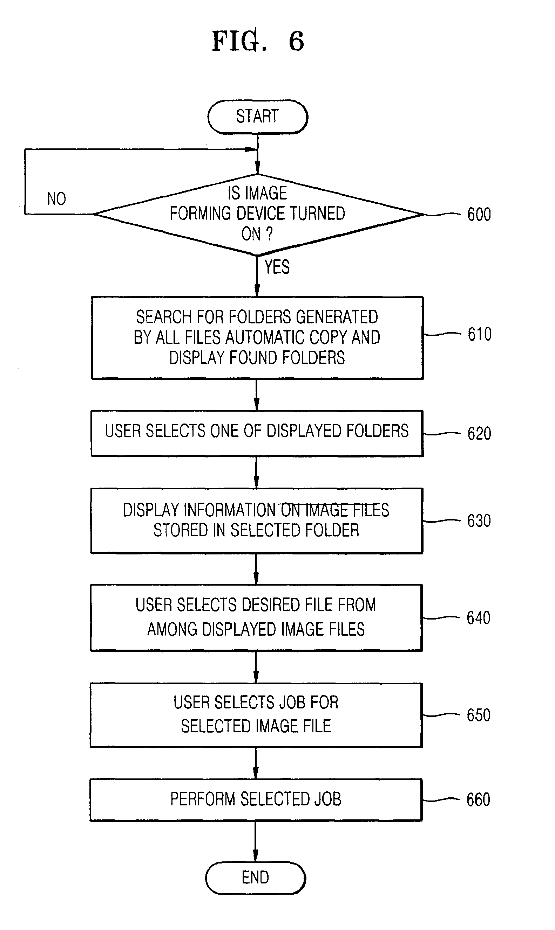

Figure 6 is a flowchart illustrating a method of managing image files copied into the HDD 250 of the image forming device 200 using the automatic copy of all files option, according to an embodiment of the present invention.

Referring to Figure 6, when the user switches on the image forming device 200 in operation 600, the power supply 230 supplies power to the image forming device 200. Then, in operation 610, the controller 220 searches for folders automatically generated by the automatic copying of all files option among folders in the HDD 250 and the display unit 270 displays information on the found folders. As described above, since the names of the folders automatically generated by the automatic copy of all files option have a specific format, for example, the file name syntax described above, the controller 220 can find the folders automatically generated by the automatic copying of all files option by searching for folders having folder names of that format. The display unit 270 may then display the names of the found folders.

In operation 620, the user can select a folder in which an image file to be managed is stored, from the displayed folders, using the user input unit 280. In operation 630, the display unit 270 receives and displays information on image files stored in the selected folder of the HDD 250. In operation 640, the user selects one or more image files from the displayed image files using the user input unit 280. In operation 650, the user can select a job for the selected image file, e.g. printing, deleting, moving, or editing. In operation 660, the printing unit 240 and/or the controller 220 performs the selected job for the selected image file.

The present invention can also be embodied as computer readable code on a computer readable recording medium. The computer readable recording medium comprises any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves, such as data transmission through the Internet.

As described above, a method and apparatus is provided for managing image files stored in an external storage medium according to embodiments of the present invention. A user interface may be provided for copying up to all image files stored in a portable storage medium into a built-in storage medium of an image forming device when connection of the portable storage medium is detected, thereby allowing the user to manage image files stored in the external storage medium easily. In addition, by using a set format for filenames of images stored in the built-in storage medium, an image file printing job can be performed easily.

While the present invention has been particularly shown and described with reference to exemplary embodiments thereof, it will be understood by those of ordinary skill in the art that various changes in form and detail may be made therein without departing from the scope of the present invention as defined by the following claims.

## Claims

1. A method of managing image files stored in an external storage medium connected to an image forming device, the method comprising:
determining whether an external storage medium is connected to an image forming device; and
in response to a positive determination, storing image files stored in the external storage medium in a storage unit included in the image forming device.

2. The method of claim 1, comprising determining whether to store the image files stored in the external storage medium in the storage unit based upon a user input.

3. The method of claim 1, comprising determining a set storage option for storing the image files stored in the external storage medium in the storage unit.

4. The method of claim 3, wherein the storage options comprise at least one of an automatic copying of all files option, a copy all files option, and a copy selected files option.

5. The method of claim 4, comprising:
if the automatic copying of all files option is set:
generating a name of a folder in which the image files are to be stored using at least one of a type of the external storage medium and a copy date and time,
wherein all image files stored in the external storage medium are stored in the folder having the generated name.

6. The method of claim 4, comprising:
if the copy all files option is set:
determining a selected folder in which the image files are to be stored from among folders of the storage unit,
wherein all image files stored in the external storage medium are stored in the selected folder of the storage unit.

7. The method of claim 6, comprising displaying information about folders in the storage unit.

8. The method of claim 4, further comprising:
if the copy of selected files option is set:
displaying information about the image files stored in the external storage medium;
receiving an input identifying a selected image file to be copied to the storage unit; and
receiving an input identifying a selecting folder in which the selected image file is to be stored in the storage unit,
wherein the selected image file is stored in the selected folder of the storage unit.

9. The method of claim 8, wherein the displayed image file information comprises thumbnail images corresponding to the image files.

10. The method of claim 1, 2 or 3, further comprising displaying information about image files stored in the storage unit.

11. The method of claim 10, wherein the display of the image file information comprises:
determining whether the image forming device is turned on;
if it is determined that the image forming device is turned on, searching for folders of the storage unit generated by an automatic copying of files process and displaying information about the found folders;
receiving an input identifying a selected one of the displayed folders; and
displaying information about image files stored in the selected folder.

12. The method of claim 10, further comprising:
receiving an input selecting at least one of the displayed image files;
receiving an input specifying a job for the selected image file; and
performing the input job for the selected image file.

13. An apparatus for managing image files stored in an external storage medium connected to an image forming device, the apparatus comprising:
a storage unit included in an image forming device for storing image files;
an interface unit for determining whether an external storage medium is connected to the image forming device, and transmitting and receiving data to and from the external storage medium; and
a controller for storing the image files stored in the external storage medium in the storage unit if it is sensed that the external storage medium is connected to the image forming device.

14. The apparatus of claim 13, further comprising a user interface unit for displaying a message to elicit a user input command to store the image files stored in the external storage medium in the storage unit.

15. The apparatus of claim 14, wherein the user interface unit is configured to set one of an automatic copying of all files option, a copy all files option, and a copy selected files option as a storage option in response to a user input command.

16. The apparatus of claim 15, wherein the controller is configured to, when the automatic copying of all files option is set, generate a name of a folder in which the image files are to be stored using at least one of a type of the external storage medium and a copy date and time, and store all image files stored in the external storage medium in the folder having the generated name.

17. The apparatus of claim 15, wherein the user interface unit is configured to, when the copy all files option is set, select a folder in which the image files are to be stored from among folders of the storage unit in response to a user command, and the controller is configured to store all image files stored in the external storage medium in the selected folder of the storage unit.

18. The apparatus of claim 15, wherein the user interface unit is configured to, when the copy selected files option is set, display information about the image files stored in the external storage medium and receive an input selecting an image file to be copied to the storage unit from among the displayed image files of the external storage medium, and receive an input selecting a folder in which the selected image file is to be stored from among folders of the storage unit" and
the controller is configured to store the selected image file in the selected folder of the storage unit.

19. The apparatus of claim 13, further comprising a user interface unit for displaying information about image files stored in the storage unit.

20. A computer readable recording medium storing a computer readable program for managing image files stored in an external storage medium connected to an image forming device, comprising:
a first set of instructions for determining whether an external storage medium is connected to an image forming device; and
a second set of instructions for storing image files stored in the external storage medium in a storage unit included in the image forming device in response to a positive determination.

21. A method of managing image files stored in an external storage medium connected to an image forming device, the method comprising:
accessing an external storage medium connected to an image forming device; and
selectively storing files stored in the external storage medium in a storage unit of the image forming device.

22. The method of claim 21, comprising connecting the external storage medium to the image forming device via a wired connection.

23. The method of claim 21, comprising connecting the external storage medium to the image forming device via a wireless connection.

24. The method of claim 21, 22 or 23, wherein the external storage medium comprises at least one of a compact flash (CF) memory card, a smart media (SM) memory card, an extreme digital (XD) memory card, a memory stick (MS), a secure digital (SD) memory card and a multimedia card (MMC).

25. The method of any one of claims 21 to 24, comprising:
displaying a message to inquire whether the user wishes to copy images stored in the connected external storage medium into the storage unit; and
selectively storing image files from the external storage medium in the storage unit in response to a user input.

26. The method of any one of claims 21 to 24, further comprising storing image files from the external storage medium in the storage unit in folders identifiable by external storage medium type and date and time of storage in the storage unit.

27. An apparatus for managing image files stored in an external storage medium, the apparatus comprising:
an image forming device comprising a storage unit for storing data;
an interface unit for transmitting and receiving data to and from an external storage medium; and
a controller for selectively storing data from the external storage medium in the storage unit in response to a user command.

28. The apparatus of claim 27, wherein the interface unit is configured to connect the external storage medium to the image forming device via a wired connection.

29. The apparatus of claim 27, wherein the interface unit is configured to connect the external storage medium to the image forming device via a wireless connection.

30. The apparatus of claim 27, 28 or 29, wherein the external storage medium comprises at least one of a compact flash (CF) memory card, a smart media (SM) memory card, an extreme digital (XD) memory card, a memory stick (MS), a secure digital (SD) memory card and a multimedia card (MMC).

31. The apparatus of any one of claims 27 to 30, wherein the controller is configured to store image files from the external storage medium in the storage unit in folders identifiable by external storage medium type and date and time of storage in the storage unit.

32. The apparatus of any one of claims 27 to 31, further comprising a user interface unit configured to receive user commands and display identifiable folder information.
